Europäisches Patentamt

European Patent Office

Office européen des brevets

(11) Veröffentlichungsnummer: **0 303 884**
**A1**

(12) **EUROPÄISCHE PATENTANMELDUNG**

(21) Anmeldenummer: **88112503.3**

(22) Anmeldetag: **02.08.88**

(51) Int. Cl.⁴: **B66C 19/00 , B65G 63/00**

(30) Priorität: **19.08.87 DE 3727597**

(43) Veröffentlichungstag der Anmeldung:
**22.02.89 Patentblatt 89/08**

(84) Benannte Vertragsstaaten:
**BE ES FR GB GR IT NL SE**

(71) Anmelder: **MAN GUTEHOFFNUNGSHÜTTE GMBH**
**Bahnhofstrasse, 66 Postfach 11 02 40**
**D-4200 Oberhausen 11(DE)**

(72) Erfinder: **Thale, Wolfgang, Dipl.-Ing.**
**Vossbarg 29**
**D-2080 Pinneberg(DE)**

(54) Anlage zum Umschlagen von Containern von Schiff auf Land und umgekehrt.

(57) Die Erfindung bezieht sich auf eine Anlage zum Umschlagen von Containern von Schiff auf Land und umgekehrt, mit einer der seeseitigen Containerhandhabung dienenden Hub- und Transportvorrichtung (4), einer der landseitigen Containerhandhabung dienenden, von der seeseitigen Hub- und Transportvorrichtung unabhängigen Hub- und Transportvorrichtung (6), einer Container-Übergabestelle und einer, auf einer Querplattform (7) abgestützten Horizontalfördereinrichtung zur Freigabe bzw. zum Besetzen der Übergabestelle. Um eine möglichst hohe Umschlagleistung im Landbereich sowie eine kombinierte Be-und Entladung zu erreichen, ist erfindungsgemäß die Übergabestelle und die Horizontalfördereinrichtung eine Drehplattform (8).

FIG. 1

EP 0 303 884 A1

## Anlage zum Umschlagen von Containern von Schiff auf Land und umgekehrt

Die Erfindung bezieht sich auf eine Anlage zum Umschlagen von Containern von Schiff auf Land und umgekehrt gemäß dem Oberbegriff des Anspruchs 1.

Eine solche Containerumschlaganlage ist beispielsweise aus der DE-OS 25 39 968 bekannt. - Bei dieser bekannten Anlage besteht die Horizontalfördervorrichtung aus einer in horizontaler Richtung verlaufenden, kontinuierlich bewegbaren Fördereinrichtung, z. B. Förderketten.

Nachteilig dabei ist vor allem, daß eine kombinierte Be- und Entladung nicht möglich ist, da die ankommenden Container den einzigen Übergabeplatz belegen.

Der Erfindung liegt die Aufgabe zugrunde, eine gattungsgemäße Containerumschlaganlage zu schaffen, mit der eine möglichst hohe Umschlagleistung im Landbereich sowie eine kombinierte Be- und Entladung erreichbar sind.

Diese Aufgabe wird erfindungsgemäß dadurch gelöst, daß die Übergabestelle und Horizontalfördereinrichtung eine Drehplattform ist. - Die erfindungsgemäße Drehplattform ermöglicht es, die Übergabestelle sofort nach Aufnahme des Containers für den nächsten Arbeitszyklus freizumachen, was eine Beschleunigung der Umschlagvorgänge ergibt. Außerdem ist bei der kombinierten Be- und Entladung die sofortige Bereitstellung eines Containers, der in das Schiff befördert werden soll, möglich. Schließlich treten nur geringe Wartezeiten der landseitigen Hub- und Transportvorrichtung (Laufkatze) und/oder der seeseitigen Hub- und Transportvorrichtung (Laufkatze) auf.

Vorteilhafte Weiterbildungen der Erfindung sind in den Ansprüchen 2 und 3 gekennzeichnet. - Dadurch ist der Arbeitsbereich und die Einsatzmöglichkeit der landseitigen Hub- und Transportvorrichtung erweitert.

Eine Verringerung der Zykluszeiten für die landseitige Hub-und Transportvorrichtung ergibt sich, wenn, gemäß einem weiteren Merkmal der Erfindung, der Querträger unterhalb der waagrechten Bewegungsebene der seeseitigen Hub- und Transportvorrichtung angeordnet ist.

In der Zeichnung ist ein Ausführungsbeispiel der Erfindung schematisch dargestellt. Es zeigt:

Figur 1 eine Containerumschlaganlage mit Abstellplätzen für zwei Container, in der Seitenansicht,

Figur 2 einen Schnitt gemäß der Linie II-II nach Figur 1,

Figur 3 eine Containerumschlaganlage mit Abstellplätzen für vier Container, in der Seitenansicht, und

Figur 4 einen Schnitt gemäß der Linie IV-IV nach Figur 3.

Die Umschlaganlage weist einen mittels Rädern auf parallel zur Schiffsmittellängsachse verlaufenden Fahrbahnen längs des Kais 1 verfahrbaren Portalkran 2 (Verladebrücke) mit einem waagrechten, seeseitig vorkragenden Ausleger 3 auf, auf dem eine Laufkatze 4 in waagrechter Richtung verfahrbar ist. Die Laufkatze 4 weist ein Hubwerk mit elastischen Hubmitteln in Form von insbesondere Seilen auf, an welchen ein Lastaufnahmemittel 9 (Spreader) aufgehängt ist, um Container zu erfassen und zu halten.

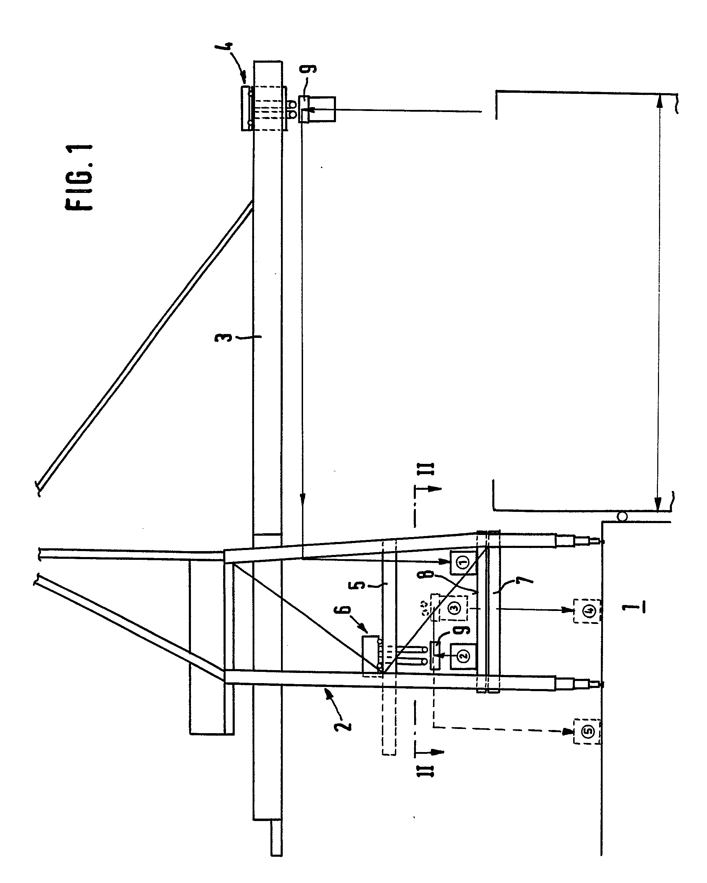

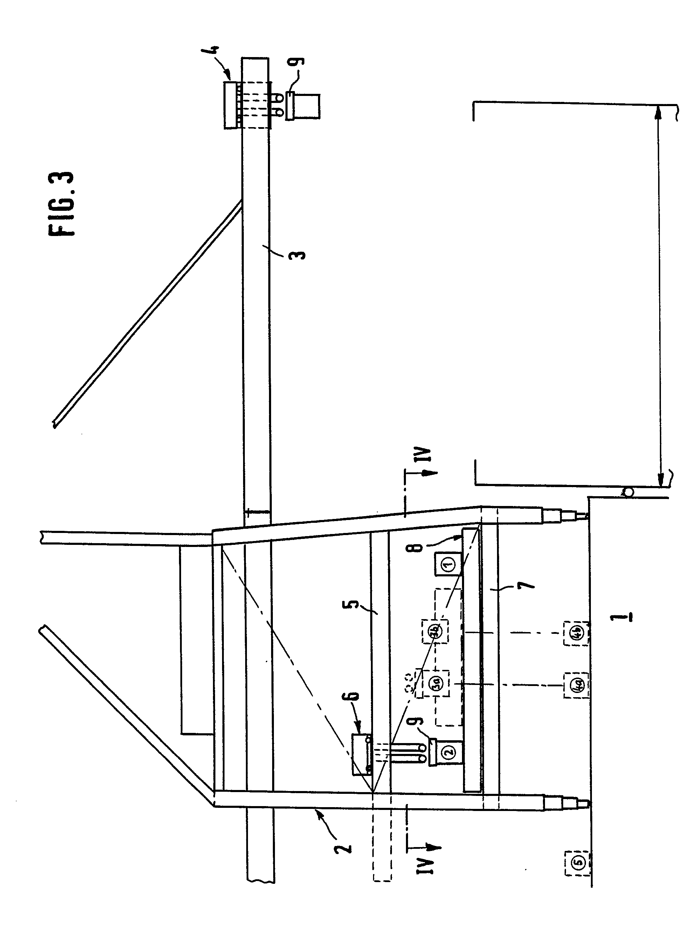

Unterhalb des waagrechten Auslegers 3 weist das Gerüst des Portalkrans 2 einen waagrechten, einen integralen Bestandteil des Gerüsts bildenden Querträger 5 auf, der Laufschienen für die Räder einer landseitigen Laufkatze 6 trägt, die im übrigen wie die Laufkatze 4 ausgebildet ist. Der Querträger 5 kann eine Erstreckung haben, die im wesentlichen der Spurweite des Portalkrans 2 entspricht. Der Querträger 5 kann auch - wie in den Figuren 1 und 3 gestrichelt angedeutet - in Richtung auf die Landseite vorkragen.

Unterhalb des Querträgers 5 und über der Durchfahrtshöhe für Container-Fahrzeuge weist das Gerüst des Portalkrans 2 eine waagrechte Querplattform 7 auf, auf der über eine Drehverbindung in Form eines Kugeldrehkranzes, senkrechter Laufrollen oder dergleichen eine waagrechte Plattform 8 abgestützt ist, die mittels eines - nicht weiter gezeichneten - Drehwerks bekannter Art drehbar ist. Die Drehplattform 8, deren Durchmesser entsprechend dem größten Containertyp gewählt ist, dient der Zwischenlagerung und Horizontalförderung von Containern, die mittels der Laufkatzen 4 und 6 abgesetzt und aufgenommen werden.

Die seeseitige Laufkatze 4 ist mindestens so weit in Richtung Landseite längsbewegbar, daß die mit 1 gekennzeichnete Position auf der Drehplattform 8 erreicht werden kann. Die landseitige Laufkatze 6 ist im wesentlichen über die ganze Länge des Querträgers 5, und folglich über die waagrechte, quer zur Fahrtrichtung des Portalkrans gerichtete Längsmittelachse der Drehplattform 8, längsbeweglich.

Die Laufkatzen 4, 5 mit ihren Lastaufnahmemitteln 9 (Spreader) sind so angeordnet, daß die Quermittellinie der Spreader direkt über der quer zur Fahrtrichtung des Portalkrans 2 gerichteten Mittellinie der Drehplattform 8 liegt.

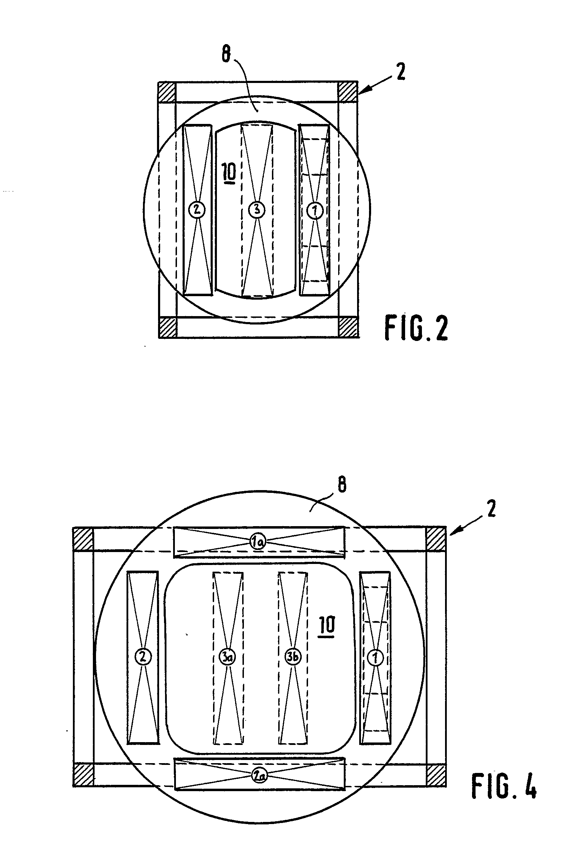

Die Drehplattform 8 und die Querplattform 7 weisen zentrale Öffnungen 10 auf, die so groß sind, daß ein Container (Figur 2) oder zwei Container (Figur 4) mittels der landseitigen Laufkatze 6 in senkrechter Richtung durch die Öffnungen 10 bewegt werden können.

Der Portalkran 2 kann mit einer automatischen Regelung versehen sein, mit der die Arbeitsweisen der Laufkatzen 4, 6 und der Drehplattform 8 automatisch gesteuert werden können.

Die Wirkungsweise der erfindungsgemäßen Container-Verladebrücke sei im folgenden am Beispiel der für zwei Containerabstellplätze konzipierten Drehplattform (Figur 1, 2) an mehreren Umschlagvorgängen erläutert. - Die an den Containerstirnflächen von einem Kreis umgrenzten Zahlen symbolisieren dabei die Position eines Containers auf der Drehplattform 8.

### 1. Schiffsentladung (Schiffsbeladung)

Die seeseitige Laufkatze 4 setzt den aus dem Schiff entnommenen Container auf der Drehplattform 8 auf Position 1 ab und fährt anschließend zur neuerlichen Containeraufnahme zum Schiff zurück. Inzwischen wird die Drehplattform 8 mit dem Container um 180° gedreht, wobei der Container seine landseitige Position 2 einnimmt. Anschließend übernimmt die landseitige Laufkatze 6 den Container aus Position 2, fährt nach landseitig außen und setzt den Container bei Position 5 auf Kai ab. - Alternativ kann die Laufkatze 6 auch nach innen bis über die Drehmitte der Drehplattform 8 verfahren und den Container - nach Absenken durch die Öffnungen 10 - bei Position 4 auf Kai absetzen.

Die Schiffsbeladung erfolgt in umgekehrter Weise.

### 2. Kombinierte Schiffsent- und Beladung

Nachdem alle auf Schiffsdeck gestapelten Container an Land gebracht und die Lukendeckel entfernt worden sind, wird eine der Schiffszellen mit Containern komplett entleert und an Land gebracht, wobei die vorstehend bei der Schiffsentladung geschilderte Verfahrensweise Anwendung findet.

Sodann erfolgt das Beladen der leeren Schiffszelle bei jeder Fahrt der Laufkatze 4 zum Schiff, wobei die Laufkatze 4 bei jeder anschließenden Rückfahrt einen Container aus der nächsten zu entladenden Schiffszelle entnimmt und an Land transportiert.

Dabei transportiert die Laufkatze 6 aus Position 4 oder 5 einen Container in Position 2 und nimmt oberhalb Position 2 eine Warteposition ein; ferner setzt die Laufkatze 4 einen Container aus dem Schiff auf Position 1 der Drehplattform 8 ab und wartet oberhalb der Position 1. Anschließend wird die Drehplattform 8 um 180° gedreht und die beiden Laufkatzen 4 bzw. 6 übernehmen jeweils den zugeordneten Container zum Abtransport.

### 3. Container-Ausrichtung

Container, die im Schiff in einer bestimmten, genauen Längs-Ausrichtungslage der Türen oder der Kühleinrichtung gestaut werden müssen, werden über Position 3 mittels der landseitigen Laufkatze 6 vom Kai 1 aufgenommen, nach oben durch die Öffnungen 10 befördert und durch waagrechtes Verfahren der Laufkatze 6, falls die richtige stirnseitige Lage des Containers vorliegt, auf Position 1 bzw., falls die falsche Stirnseite vorn bzw. hinten liegt, auf Position 2 auf der Drehplattform 8 abgesetzt. Im letzteren Fall wird durch Drehen der Plattform 8 um 180° der Container in seine richtige Längs-Ausrichtungslage gebracht.

### Ansprüche

1. Anlage zum Umschlagen von Containern von Schiff auf Land und umgekehrt, mit einer der seeseitigen Containerhandhabung dienenden Hub- und Transportvorrichtung, einer der landseitigen Containerhandhabung dienenden, von der seeseitigen Hub- und Transportvorrichtung unabhängigen Hub- und Transportvorrichtung, einer Container-Übergabestelle und einer, auf einer Querplattform abgestützten Horizontalfördereinrichtung zur Freigabe bzw. zum Besetzen der Übergabestelle, dadurch gekennzeichnet, daß die Übergabestelle und die Horizontalfördereinrichtung eine Drehplattform (8) ist.

2. Containerumschlaganlage nach Anspruch 1, wobei die landseitige Hub- und Transportvorrichtung auf Laufschienen eines waagrechten Querträgers bewegbar ist, dadurch gekennzeichnet, daß die Querplattform (7) und die Drehplattform (8) zentrale, die Durchführung mindestens eines Containers erlaubende Öffnungen (10) aufweisen, und daß der Querträger (5) und die von ihm getragenen Laufschienen sich dementsprechend weit über die Drehplattform (8) erstrecken.

3. Containerumschlaganlage nach Anspruch 1 oder 2, dadurch gekennzeichnet, daß der Querträger (5), einschließlich seiner Laufschienen, in Richtung auf die Landseite vorkragt.

4. Containerumschlaganlage nach den Ansprüchen 1 bis 3, dadurch gekennzeichnet, daß der Querträger (5) unterhalb der waagrechten Bewegungsebene der seeseitigen Hub- und Transportvorrichtung (Laufkatze 4) angeordnet ist.

FIG.1

FIG.3

EP 0 303 884 A1

θ

2

10

2   3   1

**FIG.2**

θ

2

1a

2   3a   3b   1

10

2a

**FIG. 4**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-3 812 987  (WATATANI) * Spalte 3, Zeilen 47-50; Spalte 4, Zeilen 31-47; Spalte 6, Zeilen 34-41; Figuren * | 1,3,4 | B 66 C  19/00 B 65 G  63/00 |
| A | --- | 2 | |
| Y | US-A-4 678 390  (BONNETON) * Spalte 9, Zeilen 8-29; Spalte 17, Zeilen 20-45; Figuren 1,2,3 * --- | 1,3,4 | |
| D,A | DE-A-2 539 968  (CONRAD-STORK) * Figuren * --- | 1,2 | |
| A | GB-A-1 557 640  (HITACHI) * Figur 1 * ----- | 1,2,3 | |

RECHERCHIERTE SACHGEBIETE (Int. Cl.4)

B 65 G
B 66 C

Der vorliegende Recherchenbericht wurde für alle Patentansprüche erstellt

| Recherchenort | Abschlußdatum der Recherche | Prüfer |
|---|---|---|
| DEN HAAG | 11-11-1988 | OSTYN T.J.M. |